# EUROPEAN PATENT APPLICATION

(11) **EP 3 495 051 A1**
(43) Date of publication of application: **12.06.2019**
(21) Application number: 17206486.7
(22) Date of filing: 11.12.2017
(51) Int. Cl.: B05D 3/06, B05D 7/06, B05D 7/00, B32B 21/14, B32B 27/40, E04F 15/024, B05D 5/06, B44C 5/04, E04F 15/10

(54) **METHOD FOR THE MANUFACTURE OF A FLOOR TILE WITH A WOOD BASED SUBSTRATE**

(71) Applicant: Tarkett GDL S.A., 9779 Lentzweiler (LU)
(72) Inventor: GRKOVIC, Mladen, 11030 Cukarica, Belgrade (RS); BUGARCIC, Branko, 21400 BACKA PALANKA (RS); BRANKOV STOJANOVIC, Irena, 21400 BACKA PALANKA (RS); CVIJETIC, Predrag, 21000 NOVI SAD (RS)
(74) Representative: Lavoix

(57) **Abstract**

A method for the manufacture of a floor tile (1), comprising at least the following successive steps:
- obtaining a substrate (2) having at least a wood based upper layer (4);
- coating the substrate (2), wherein coating the substrate (2) comprises applying at least a first layer of coating (15) on the upper surface (13), curing the first layer of coating (15) using UV rays, applying a second layer of coating (17) on the first layer of coating (15), and curing the second layer of coating (17) using UV rays, wherein the first layer of coating (15) contains a hardener and the second layer of coating (17) contains a filler;
- applying a primer layer (7) on the coated substrate;
- digitally printing a decor (9) on the primer layer (7); and
- applying a top coat (11) on the decor (9).

## Description

The present invention deals with a method for manufacturing a floor tile with a wood based substrate, notably panels and boards, in particular based on wood fibers such as MDF (Medium Density Fiberboard) or HDF (High Density Fiberboard) substrates on which a décor is formed by digital printing.

The invention also deals with a floor tile with a wood based substrate, obtainable using such a method.

Digital printing refers to methods of printing from a digital based image directly to the substrate. It usually refers to professional printing where small run jobs from desktop publishing and other digital sources are printed using large format and/or high volume laser or inkjet printers. Digital printing has a higher cost per printed object than traditional offset printing methods but this price is usually offset by the cost saving achieved by avoiding all the technical steps in between needed to make printing plates.

In order to obtain high quality, the décor may be printed on a separate support of paper or fleece which is applied onto the substrate. Indeed, while a basic layer may be applied in order to ensure sufficient adherence of the applied inks, such basic layers may affect the printing quality. Indeed, a porous layer may absorb the ink leading to insufficient covering while a non-porous basic layer may lead to their coalescence and affect color quality. The use of a separate support for printing however makes the process more costly and complex.

Usually the substrate comprises a core layer and an upper layer which is made of wood or derived from wood. When the upper layer thickness is relatively small and lies for example between 0.5 and 2 mm, it is usually referred to as "veneer", and when the thickness is larger, for example between 2.5 and 4 mm it is usually referred to as 'wooden lamellas'. The veneer is selected for having a nice aspect, devoid of any visible imperfections.

In a known solution, a single piece of veneer covers the core layer of the tile. In this case, the dimensions of the veneer are those of the tile, typically 2m x 18-22cm x 2-3mm.

As a consequence, the veneer, and consequently the tile, are rather expensive. In order to obtain tiles at a more competitive cost, several pieces of veneer are used for covering the core layer. In this solution, each single piece has a smaller surface than the tile. For a same quality, these smaller pieces cost less than the large ones, so that production costs are decreased. However, the visual aspect of the tile is not as good, for the junctions between the pieces of veneer tend remain visible, which gives the user an impression of lower quality.

An aim of the invention is to provide a floor tile at competitive cost, providing the user with an impression of better quality.

To this end, the invention proposes a method for the manufacture of a floor tile comprising at least the following successive steps:
- obtaining a substrate having at least a wood based upper layer;
- optionally sanding an upper surface defined by the upper layer;
- coating the substrate, wherein coating the substrate comprises applying at least a first layer of coating on the upper surface, curing the first layer of coating using UV rays, applying a second layer of coating on the first layer of coating, and curing the second layer of coating using UV rays, wherein the first layer of coating contains a hardener and the second layer of coating contains a filler;
- optionally sanding an upper surface of the coated substrate;
- applying a primer layer on the coated substrate;
- digitally printing a décor on the primer layer; and
- applying a top coat on the décor.

In other embodiments, the method may comprise one or several of the following features, taken in isolation or any technically feasible combination:
- the substrate comprises obtaining a core layer, and paving the core layer with several adjacent pieces of veneer in order to obtain the upper layer;
- the core layer is chosen from the group consisting of panels and boards, preferably from the group consisting of HDF, MDF, cardboards and WPC;
- the hardener comprises an isocyanate;
- the hardener comprises a mix of hexane,1,6-diisocyanato-homopolymer and hexamethylene-di-isocyanate;
- the filler comprises an acrylate functionalized resin;
- the primer layer is a white;
- the step of digitally printing is carried out using a Drop-on-Demand inkjet system; and
- the step of digitally printing is carried out using UV ink or water-based ink.

The invention also relates to a floor tile comprising:
- a substrate having at least a wood based upper layer defining an upper surface, the upper surface being optionally sanded;
- a coating comprising at least a first layer of coating located on the upper surface, and a second layer of coating located on the first layer of coating, the first layer of coating containing a hardener and having been cured by UV rays, the second layer of coating containing a filler and having been cured using UV rays, the coating defining an upper surface, and the upper surface being optionally sanded,
- a primer layer located on the upper surface of the coating;
- a décor digitally printed on the primer layer; and
- a top coat located on the décor.

In other embodiments, the floor tile comprises one or several of the following features, taken in isolation or any technically feasible combination:
- the hardener comprises an isocyanate;
- the filler comprises an acrylate functionalized resin;
- the primer layer is white; and
- the thickness of the coating is between 30 and 40 microns.

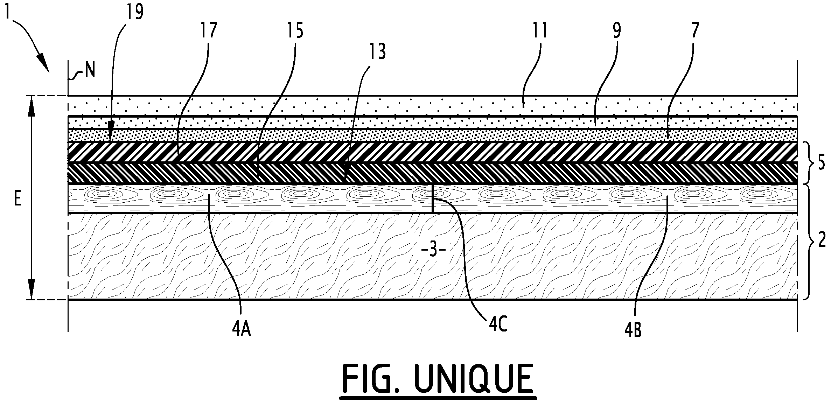

The invention and its advantages will be better understood upon reading the following description, given solely by way of example and with reference to the appended drawing, in which the Figure is a schematic cross sectional view of a floor tile according to the invention.

With reference to the Figure, a floor tile 1 is described.

The floor tile 1 has a thickness E along a direction N perpendicular to the floor tile. The floor tile 1, in view along the direction N, may have any shape allowing paving a floor (not represented): rectangular, square, triangular, hexagonal...etc. The floor tile 1 is intended to be applied on the floor adjacent to other tiles (not represented) having the same shape or composition, or different ones. Advantageously the floor tile 1 includes locking tabs (knows in themselves and not represented) enabling to connect it to adjacent tiles.

Successively in the direction N, the floor tile 1 comprises a substrate 2, a coating 5, a primer layer 7 located on the coated substrate, a décor 9 digitally printed on the primer layer, and a top coat 11 located on the décor.

The substrate 2 comprises a core layer 3, and an upper layer 4 forming a veneer applied on the core layer. The thickness of the substrate 2 for example ranges from 1.8 to 2.2 mm. The substrate 2 has an upper surface 13 which has advantageously been sanded, in order to promote the adherence between the substrate and the coating 5.

The core layer 3 may be chosen from the group consisting of panels and boards. wood based boards, in particular wood-fiber boards are preferably used.

In one embodiment, the core layer 3 is chosen from the group consisting of HDF, MDF, cardboards, WPC (Wood Plastic Composite) and soft wood ribs. In particular, the substrate is HDF.

The upper layer 4 is for example formed by several pieces of veneer adjacent perpendicularly to the direction N, of which two pieces 4A, 4B are represented on the Figure.

The upper layer 4 is for example made of wood, or derived from wood. The veneer is selected for having a nice aspect, normally devoid of any visible imperfections.

The two pieces 4A, 4B defines a junction 4C between themselves.

As a variant (not shown), the upper layer is made of a single piece of veneer.

The coating 5 is located on the upper surface 13. The coating 5 comprises a first layer of coating 15 located on the upper surface 13, and a second layer of coating 17 located on the first one. The coating 5 has an upper surface 19 which has advantageously been sanded. The thickness of the coating 5 is between 30 and 40 microns when finalized.

The first layer of coating 15 contains a hardener and has been cured by UV rays.

In a particular embodiment, the first layer of coating 15 only contains the hardener.

The hardener is for example an additive, preferably an isocyanate which advantageously reacts with the moisture of wood fibers of the core layer 3.

The hardener promotes the bound between wood fibers and the coating 15. The hardener may contain a mix of hexane,1,6-diisocyanato-homopolymer and/or hexamethylene-di-isocyanate.

According to a particular embodiment, the hardener is made of said mix.

The second layer of coating 17 is for example a filler which has been cured using UV rays. The filler is for example a thixotropic UV curable coating based on acrylate functionalized resin, such as urethane, polyester, or epoxy. The filler is used to fill the pores of the core layer 3 and/or the first layer of coating 15 before applying the primer 7.

The primer 7 is advantageously white.

The décor 9 comprises one or several UV inks. The used inks may comprise cyan, magenta, yellow and black inks, but advantageously no white ink. The quantity of inks used is in total between 30 and 50 g/m² and more preferably between 35 and 40 g/m². The thickness of the primer 7 and the décor 9, taken altogether, is between 25 and 30 microns.

A method for producing floor tiles such as the floor tile 1 will now be described.

First the wood based substrate 2 is obtained. Ways to obtain such a substrate are known to the skilled person and will not be described.

Then the upper surface 13 of the substrate 2 is sanded.

The coating 5 is then applied on the upper surface 13.

To that end, the first layer of coating 15 is applied on the sanded upper surface 13, and cured using UV rays (not represented). Curing is performed in a manner known in itself. Preferably, the applied amount of dry film is between 15 and 40 g/m².

The second layer of coating 17 is applied on the first layer of coating 15, and the filler is cured using UV rays. Preferably, the applied amount of dry film is between 10 and 50 g/m².

Thanks to the coating, the junction 4C or the imperfections of the veneer will not be perceived one the tile 1 is finished.

The upper surface 19 of the substrate 5 is then advantageously sanded, and the primer layer 7 is applied on the upper surface. Preferably, the applied amount of dry film is between 10 and 60 g/m². The primer layer 7 facilitates future application of the inks.

The décor 9 is then printed on the primer layer 7. This is advantageously carried out using a Drop-on-Demand inkjet system, for example using UV ink. Advantageously, only cyan, magenta, yellow or black inks are used, but no white ink.

The top coat 11 is finally applied on the décor 9. Preferably, the applied amount of top coat, once dry, is between 5 and 12 g/m². The thickness of the top coat 11 is between 40 and 50 microns.

In particular embodiments, the obtained panel is cut into smaller pieces forming the tiles.

Thanks to the above features, imperfections due to the junction between the pieces 4A, 4B of veneer, or due to a lower quality of the veneer are masked by the coating 5. Hence the floor tile 1 provides the user with an impression of better quality at more competitive cost.

The invention provides a parquet with "laminate" design on top. The obtained parquet looks very natural. It also allows a variety of design effects, such as like with a laminate product.

The obtained floor tiles are cheaper compared to corresponding standard wood products, and have an equal durability, thanks to the top coat.

Environmental aspect of the obtained floor tiles is also really positive, since about twice less veneer raw material is used in order to produce high quality tiles with several pieces of veneer in each tile.

### Example(s)

As an example, the first layer of coating 15 may by a mixture of the UV SEALER 583 and the HARDENER 896 from AkzoNobel.

The second layer of coating 17 may be the UV FILLER 576 from AkzoNobel.

The primer 7 may be the UK1373-9001 from Sherwin-Williams.

The top coat 11 may be a lacquer from AkzoNobel, such as UV TOP COAT NATURA, UV TOP COAT PROTECO or UV TOP HIGH GLOSS.

### Protocole:

Obtain the substrate,
Apply the first layer of coating 15 with hardener and then cure the first layer of coating,
Apply the second layer of coating 17 with the filler and then cure the second layer of coating,
Sand the upper surface,
Change of line for performing digital printing on the white primer 7 and then curing of the UV inks,
Go back to the first line and print the décor 9 using UV inks and then cure the UV inks,
Apply the top coat 11 and then cure it.

## Claims

1. A method for the manufacture of a floor tile (1), comprising at least the following successive steps:
- obtaining a substrate (2) having at least a wood based upper layer (4);
- optionally sanding an upper surface (13) defined by the upper layer (4);
- coating the substrate (2), wherein coating the substrate (2) comprises applying at least a first layer of coating (15) on the upper surface (13), curing the first layer of coating (15) using UV rays, applying a second layer of coating (17) on the first layer of coating (15), and curing the second layer of coating (17) using UV rays, wherein the first layer of coating (15) contains a hardener and the second layer of coating (17) contains a filler;
- optionally sanding an upper surface (19) of the coated substrate;
- applying a primer layer (7) on the coated substrate;
- digitally printing a décor (9) on the primer layer (7); and
- applying a top coat (11) on the décor (9).

2. The method according to claim 1, wherein obtaining the substrate (2) comprises obtaining a core layer (3), and paving the core layer (3) with several adjacent pieces of veneer (4A, 4B) in order to obtain the upper layer (4).

3. The method according to claim 1 or 2, wherein the core layer (3) is chosen from the group consisting of panels and boards, preferably from the group consisting of HDF, MDF, cardboards and WPC.

4. The method according to any one of claims 1 to 3, wherein the hardener comprises an isocyanate.

5. The method according to claim 4, wherein the hardener comprises a mix of hexane,1,6-diisocyanato-homopolymer and hexamethylene-di-isocyanate.

6. The method according to any of claims 1 to 5, wherein the filler comprises at least 50wt% of an acrylate functionalized resin.

7. The method according to any one of claims 1 to 6, wherein the primer layer (7) is white.

8. The method according to any one of claims 1 to 7, wherein the step of digitally printing is carried out using a Drop-on-Demand inkjet system.

9. The method according to any one of claims 1 to 8, wherein the step of digitally printing is carried out using UV ink or water-based ink.

10. A floor tile (1) comprising:
- a substrate (2) having at least a wood based upper layer defining an upper surface, the upper surface being optionally sanded;
- a coating (5) comprising at least a first layer of coating (15) located on the upper surface (13), and a second layer of coating (17) located on the first layer of coating (15), the first layer of coating (15) containing a hardener and having been cured by UV rays, the second layer of coating (17) containing a filler and having been cured using UV rays, the coating defining an upper surface (19), and the upper surface (19) being optionally sanded,
- a primer layer located on the upper surface (19) of the coating (5);
- a décor (9) digitally printed on the primer layer (7); and
- a top coat (11) located on the décor (9).

11. The floor tile (1) according to claim 10, wherein the hardener comprises an isocyanate.

12. The floor tile (1) according to claim 10 or 11, wherein the filler comprises an acrylate functionalized resin.

13. The floor tile (1) according to any one of claims 10 to 12, wherein the primer layer (7) is white.

14. The floor tile (1) according to any one of claims 10 to 13, wherein the thickness of the coating (5) is between 30 and 40 microns.
